# EUROPEAN PATENT APPLICATION

(11) **EP 1 609 629 A1**
(43) Date of publication of application: **28.12.2005**
(21) Application number: 05104006.1
(22) Date of filing: 26.06.2001
(51) Int. Cl.: B60C 23/04

(54) **System for detecting and communicating operational characteristics of tires telecommunicationally**

(30) Priority: 26.06.2000 US 603996; 02.05.2001 US 846388; 18.06.2001 US 881758
(62) Divisional of application: 01660122.1
(71) Applicant: Nokian Tyres PLC., 37100 Nokia (FI)
(72) Inventor: LAITSAARI, Juha, 33420, Tampere (FI); HAKANEN, Jukka, 33270, Tampere (FI)
(74) Representative: Tanhua, Pekka Vilhelm

(57) **Abstract**

A system for a tire to be mounted to a vehicle allows each of the tires to communicate with a mobile communicator (28), such as for example a mobile phone. The system inchides typically at least sensors (20, 22, 24, 26) for monitoring and measuring the pressure and temperature of the tire. The measured parameters of the tire are fed to a processor (14) that compensates the measured pressure with the measured temperature. The temperature corrected tire pressure is then stored in a memory store (18). A communications module (16), operating under a wireless data link protocol such as for example the Bluetooth protocol, sends the stored information to a mobile phone, in response to a request thereby. The temperature corrected data of the tire is also transmitted to the other tires of the vehicle. Any one of the systems (2) relating to the tires may act as the server of all of the other tires for the information of the respective tires of the vehicle to the mobile phone, which acts as the browser. Alternatively, the mobile phone could request that of the various tires be sent to it individually by the systems of the respective tires.

## Description

### Field of the Invention

The preset invention is directed to tires, and specifically to systems integrated to or otherwise in connection with tires, said systems able to transmit information regarding the characteristics of the tires to a mobile communications device being carried by a user.

### Background of the Invention

A vehicle such as for example an automobile usually has mounted thereto a set of tires. These tires the only means by which the vehicle makes contact with the road. And when the vehicle is traveling at a high speed, it is imperative that the operational characteristics of the tires be maintained above a given standard so as to avoid accidents and potential injury to the driver and passengers, if any, of the vehicle.

The prior art the teaches the incorporation of sensors, either to the tire proper or in thereof, for measuring an operational parameter of the tire. Once the proximity thereof, for measuring an operational parameter of the tire. Once the parameter is measured, it is transmitted to a terminal, at a remote location, such as for example a maintenance facility, or to a monitor fixedly mounted to the vehicle. Such prior art teachings are disclosed for example in U.S. patents 5,825,286, 5,731,754, 5,731,516, 5,585,554, 5,540,092, 5,7,41,966, 51472,938 and 5,825,283.

The GB patent 2344232 discloses a tyre condition monitoring system, comprising a receiver unit for receiving data transmitted by wheel transmitter unit comprising a sensor and transmitter, where the receiver unit is operable in hand-held and in-vehicle mode. The hand-held version may be a removable receiver/display unit of particular type.

In particular, the prior art teaches that particular types of interrogators and transmitters have to be designed for a remotely located facility in order for the remote facility to receive information from the tires of the vehicle. And in order to be able to provide information relating to the tires to driver of the vehicle, a special apparatus has to be either incorporated to the vehicle during its manufacture, or tetrofitted thereto after the vehicle has been placed into service Needless to say, such apparatus specifically designed for receiving the information from the tires are bulky and expensive.

The prior art furthermore does not teach the provisioning of information relating to the tires of a vehicle to the user of the vehicle, when the user is away from the vehicle, Nor does the prior art teach communication among the tires.

It is therefore an objective of the present invention to provide an economical way for a user to mobilely monitor the operational characteristics of the tires mounted to a vehicle.

It is another objective of the present invention to provide a method whereby an operator of a vehicle can query the conditions of the tires on his vehicle, when he is either driving the vehicle or is away from the vehicle.

It is yet another objective of the present invention to enable communication among the tires of the vehicle so that the overall operational characteristics of the tires of the vehicle can readily be conveyed to the operator by means of any one of the tires.

The objective of the invention is achieved by the system according to claim 1.

The dependent claims describe some preferred embodiments of the invention.

One system to which the invention relates has sensor means and transceiver means, and it is intended for detecting and communicating operational characteristics of a tire to mobile communication means. Such a system may alternatively be adaptable to be integrated with a tire, provided inside a tire for example by mounting or fixing it on the surface of a tire, or coupled to the rim to which a tire is mounted about. The system may be, for example, coupled to the rim whith a belt or fixed to the surface of the rim. The system may further have either a generator and/or a conventional battery for providing energy to the transceiver means and possible processor means.

it is possible that a system having sensor means, transceiver means and possible processor means is one integrated component. Alternatively, it is possible that a separate sensor part having all or part of the sensor means is coupled to the tire, for example for measuring the movements or deformation of the tire, and the rest of the system is coupled to a rim. In this case, the separate sensor part may be connected to the rest of the system, for example, with wires (an example of electrical connection) or wirelessly (that is, electromagnetically) using, for example, a further radio link between the sensor part and the rest of the system. In the case of a wireless connection, the separate sensor part has at least a transmitter and the other part of the system has at least a receiver for enabling unidirectional radio link. Alternatively, both the sensor part and the other part of the system may have transceivers. This further radio link may employ any suitable radio frequency or protocol for transmitting information from the sensor part to the other part or between these parts of the system.

### Brief Description of the Figures

The above-mentioned objectives and advantages of the present invention will become apparent and the invention itself will best be understood by reference to the following description of an embodiment of the invention taken in conjunction with the accompanying drawings, wherein:
Fig. 1 is an illustration of the system to be integrated to each tire of a vehicle, and its remote connectivity to a mobile communicator;
Figs 2a-2c in combination form the flow diagram for illustrating the operation of the system of the instant invention as shown in Fig. 1; and

### Detailed Description of the Present Invention

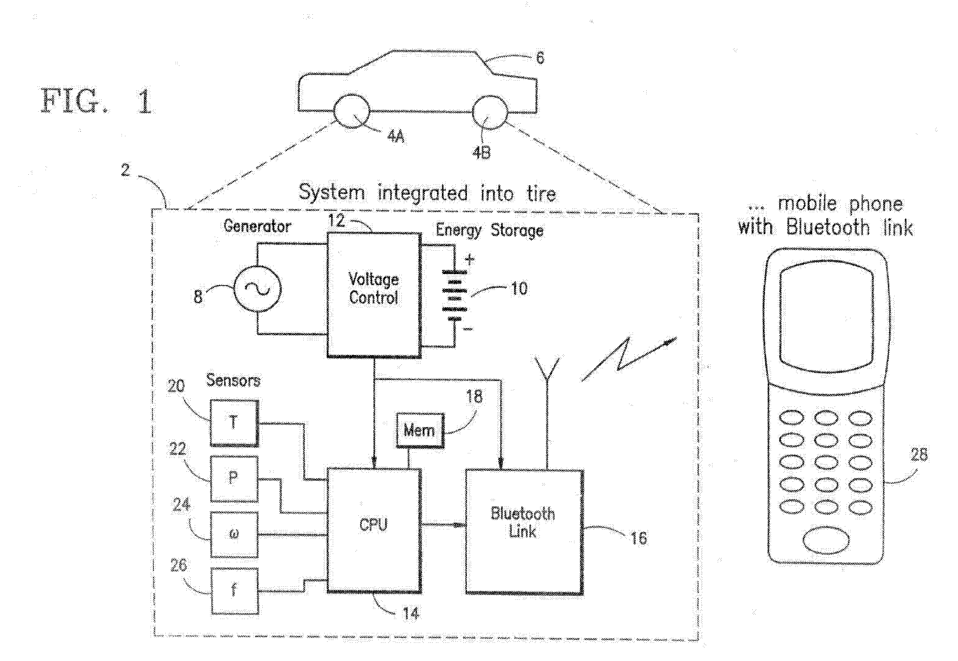

With reference to Fig. 1, the present invention includes a system 2 that is integrated to each of the plurality of tires 4a, 4b (and those tires not shown), mounted to a vehicle 6. System 2 could be integrated or incorporated to the interior wall of each of the tires 4 of vehicle 6 in a number of ways, among which are the methods in which integrated circuits are affixed to tires as disclosed for example in U.S. patents 5,483,827, 5,977,870 and 5,218,861. The respective disclosures of the '827, '879 and 861 patents are incorporated by reference to the disclosure of the instant specification.

For the instant system 2 that may be integrated to each of the tires of the vehicle, such as for example an automobile, a truck, semi, etc., includes a generator 8 that converts the vibrations, or movement, of the tires into electrical energy. Such generator may be a means for converting energy, i.e., an energy conversion mechanism. Generator 8, in practice, could be a linear actuator such as for example the linear actuators manufactured by the Moving Magnet Technologies Company of Besancon, France, or a piezoelectric actuator such as the ACX Quick Pack actuator manufactured by the Active Control Experts Company of Cambridge, Massachusetts.

The electrical energy converted from generator 8 is fed to a conventional voltage control circuit 12, so that it may be provided to an energy store such as for example a rechargeable battery 10, a processor 14 and/or a telecommunications or transceiver module 16, Communications module 16 is a transceiver, or transponder, that operates under a telecommunications protocol. Processor 14 could be any kind of conventional microprocessors made by, for example, companies such as Intel or AMD. For the embodiment shown, in Fig. 1, an Atmel Atmeca-103 8 bit micro controller may also be used,

A memory store 18 is electrically connected to processor 14, Data generated by processor 14 may be stored in memory store 18. Conversely, information stored in memory store 18 could be retrieved by processor 14 for further processing.

Also electrically connected to processor 14 are a number of sensors 20, 22, 24 and 26. These sensors are conventional sensors that are used to measure the temperature, pressure, rotational speed and frequency, respectively, of the tire. These sensors could be obtained from the Senso Nor Company of Horten, Norway or the VTI Hamlin Oy of Vantaa, Finland.

Although shown with four sensors, it should be appreciated that system 2 of the Fig. 1 embodiment could in fact have additional sensors such as for example sensors for measuring the acceleration and other parameters or characteristics of the tire. Other characteristics of the tire that may be measured include for example tire wear or tire friction. Moreover, in addition to the direct monitoring and measurement of the tire pressure, it is also possible to determine the pressure inside the tire from the information obtained from an acccrometer. This may be done by correlating a certain pressure level to a certain frequency/amplitude of movement, or vibration, of the tire. Accordingly, sensors that measure the acceleration of the tire could also be integrated to the tire. Conversely, for the instant invention to operate, a minimum of at least one sensor, i.e., typically the pressure sensor or a sensor for measuring the pressure indirectly, is all that is required.

But for blow-outs or serious cuts, most tire failures are usually preceded by a gradual loss of inflation pressure, Thus, the parameter, or characteristics, of a tire that should be monitored closely is its pressure. But due to the heat generated from the rotational movement and vibration of the tire, to get an accurate reading of the tire pressure, the measured tire pressure should preferably be compensated by the temperature of the tire. Thus, both the air pressure and the temperature of the tire should preferably be monitored by, for example, sensors 22 and 20, respectively, in order to obtain a temperature corrected reading of the tire pressure.

Although the different parameters of the tires are typically monitored continuously by the respective sensors, to preserve energy, measurements of the parameters are taken periodically. These predetermined periodic measurement are fed to processor 14, which does the actuel calculation to compensate the pressure parameter with the temperature parameter, or any other measured parameters.

In those instances, where the of interest measured parameter passes a predetermined threshold, for example the measured, tire pressure falling below a given pressure such as for example 1.5 bar or 20 psi, a warning signal is typically immediately output from processor 14 to communications module 16 for transmission to the user. More on that later.

Although unlikely, there is always the possibility that the pressure of the tire would exceed a given high pressure and thereby increases the likelihood that there would be a blow-out. Thus, for the instant invention system, such over inflation likewise would preferably trigger an immediate alarm if the pressure sensor 22 determines that the pressure in the tire approaches or passes an upper predetermined tire pressure limit.

Transceiver module 16 operates under a telecommunications protocol. Such protocol may be a conventional wireless data link protocol such as example the Bluetooth communications protocol that allows relatively short distance (10 m to 100 m) data communications between communicative elements with a throughput up to 1 Mbps. The link established by such Bluetooth protocol could be considered as a radio link that operates in the unlicenced 2.4GHz band. Further, under the Bluetooth protocol, such radio link employs a spread spectrum technique that allows the signal to frequency hop to thereby operate effectively even in noisy environments. Forward error correction. (FEC) is also used in the Bruetooth protocol to improve the overall data transfer in the presence of noise. Module 16, operating under such Bluetooth protocol or other similar protocol may be purchased from the Ericsson Company of Sweden or the Cambridge Silicon Radio Company of Cambridge, England. For the sake of simplicity, the external flash ROM memory that contains the Btuctooth software stack for operating communications module 16 is not shown in system 2.

Given that transceiver module 16 is capable of transceiving information within a given distance, mobile communicators or communication units such as for example pagers, digital assistance (PDA) devices, wireless terminal, and mobile phones all may be used for trancieving information with transceiver module 16. For the embodiment shown in Fig. 1, a mobile communicator such as tor example a Nokia cellular browser capable phone that is WAP (wireless application protocol) compliant is used. Such mobile phone includes the Nokia models 6210, 6250, 9110i and 71 10. Each of those Nokia phones may be used as a WAP browser that enables it to effectively communicate with communications module 16, which may act as a server when communicating with mobile phone 28. As noted above, even though a mobile phone is used fhr the enibodiiiietit of Fig, 1, other types of mobile communicators could likewise be used as the browser, so long as they are WAP adaptive. Of course, as technology advances, other types of wireless data link or speech combined with data link protocols or formats that are equivalents to, or replacements of, the WAP protocol are also envisioned and are adaptable for use for the instant invention.

Insofar as the Bluetooth communications protocol provides for two-way connection, mobile phone 28 in fact is communicatively connectable to any one of the tires 4 mounted to vehicle 6 at any time. Similarly, every tire mounted to vehicle 6 is in direct communication with every other tire so that the respective information from all of the tires of the vehicle are exchanged among the tires. The respective information from the various tires, when fed to a tire, is stored in memory store 18 of that tire. Accordingly, memory store 18 has stored therein information relating to all of the tires of the vehicle. Thus, any one of the tires mounted to the vehicle could in fact act as a server for collecting the operational parameters from the other tires, as well as itself, and transmit all of that information to the mobile communicator. Alternatively, each of the tires can transmit its own information individually to the mobile communicator, as each of the tires has its own communications module.

As phone 28 is mobile, the operator of the vehicle may in fact obtain information relating to the operational characteristics of the tires of the vehicle without being in the vehicle, by simply sending out a query to the tires for retrieving information being monitored thereat.

To conserve energy, when the vehicle is not moving and there is no request from the mobile communicator for information after a given time period, system 2 is put into a sleep or standby mode. But as was noted above, if a certain predetermined threshold is sensed at any of the tires of the vehicle, that would wake from its sleep mode and immediately transmit a warning message, which may include sound, vibrations, or other sensory attributes to the operator via mobile phone 28.

Since all of the tires of the vehicle communicate with each other, the respective positions of the tires, with respect to each other and the vehicle, are known. The tires together with the mobile communicator therefore in essence establish, a mini telecommunications network or intranet that enables each tire to know exactly the stains the other tires, and to report the respective statuses of the tires to the operator via the mobile communicator carried by him.

With reference to Fig, 2, the operation of the system of the instant as it relates, to one of the tires of the vehicle, is given as an example. The operation of the system of the instant invention is effected by the various component, either singly or in combination, as shown in Fig. 1.

Beginning at process step 30, the system is in a sleep mode, or has been put on standby. To initiate the system, a determination is made, by processor 14 from input by an appropriate sensor, on whether vehicle. 6 is moving, per process step 32. If the vehicle is stationary, and therefore the tires are not rotating, the process returns to step 30. Once it is determined that the vehicle is moving, the process proceeds to step 34 so that sensors of the system would begin to measure the various tire parameters of the tire. As was noted above, the two tire parameters that should be measured are the tire pressure and the temperature

Process step 34 also begins when there is a specific, request from the mobile communicator, such as mobile phone 28, that information be transmitted thereto per step 36. In any event, once the parameters are measured by the sensors, the process proceeds to step 38 in which the measured tire pressure is compensated by the measured temperature. If additional parameters are measured, some of those parameters also be compensated by the other measured parameters. The process then determines whether the corrected tire pressure is an updated tire pressure, per step 40. If other tire parameters are also being measured and compensated, then those corrected tire parameters are likewise determined per step 40 on whether or not they are updated tire parameters.

if it is determined that the tire pressure has not been updated, the process returns to step 34, so that the tire parameter can continuously be monitored and measured. However, if it is determined that the measured parameter is an updated parameter, then the updated parameter is stored as new data in memory store 18 of the system, per step 42.

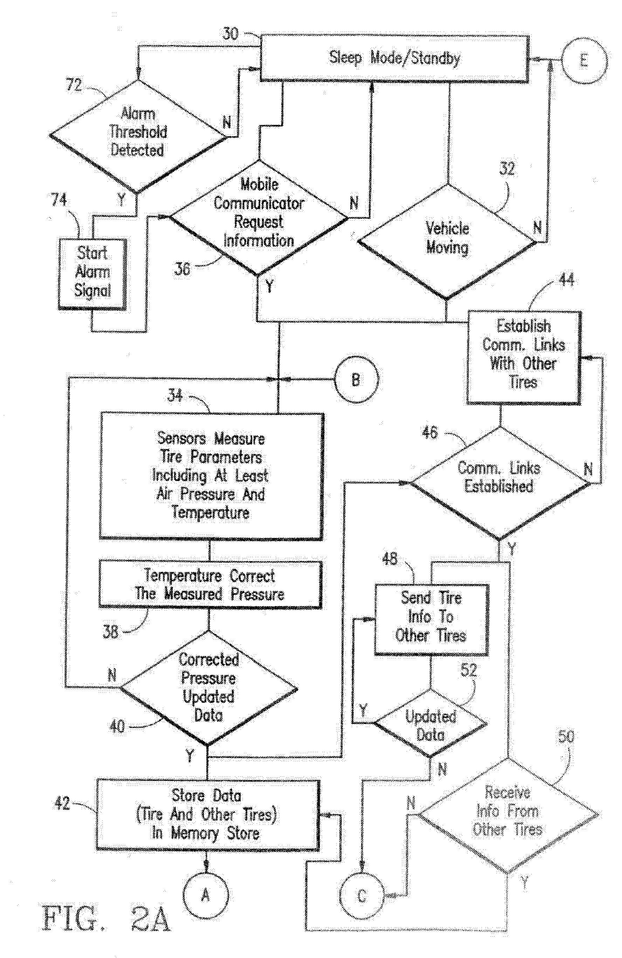

Further with respect to Fig. 2a, after the process has determined that the vehicle is in fact moving, per step 32, or that the mobile communicator has sent a query requesting information, per step 36, the tire initiates an attempt to establish communications links with the other tires, per step 44. A determination is then made, per step 46, on whether or not the communications links are established. If they are not, the process returns to step 44 and waits until the communications links with the other tires of the vehicle are established.

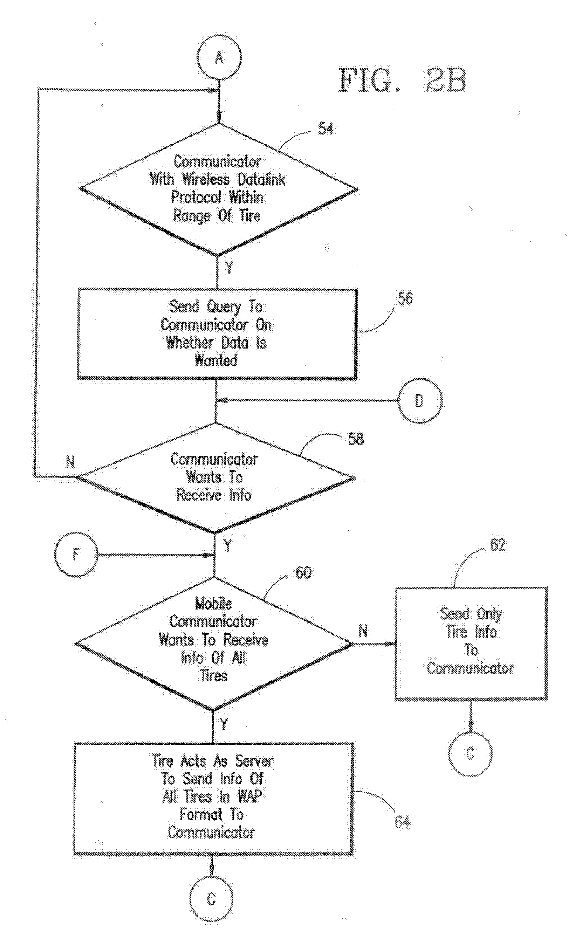

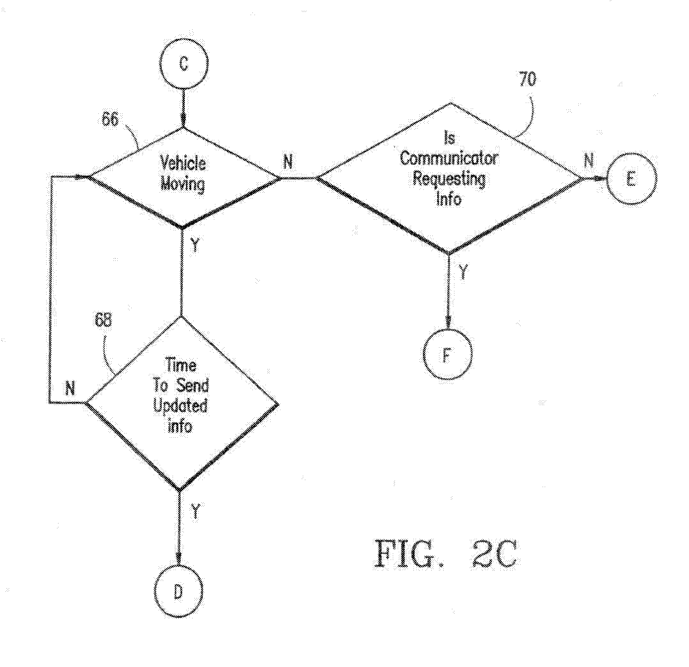

Thereafter, the information, if any, that is stored in the memory store of the system of the tire being discussed with reference to Fig. 2 is transmitted to the other tires of the vehicle, per step 48. At the same time, if there is data that is being transmitted from the other tires of vehicle 6 to the tire being discussed, as determined in step 50, then those data from the other tires are routed to memory store 18 of the being discussed tire for storage. If no data is being received from the other tires, the process proceeds to tep 66 (Fig. 2c) to determine whether the vehicle is still moving.

Similarly, once the being discussed tire has sent whatever information it has in its memory store to the other tires, it proceeds to step 52 to determine whether the data in its memory store relating to its own characteristics has been updated. If it has, then that updated data is transmitted to the other tires. If not, the process proceeds to step 66.

With reference to Fig. 2b, once the measured and compensated parameters relating to the being discussed tire and the data received from the other tires of the vehicle are stored in the memory store, the process proceeds to step 54, so that the system can made a determination on whether the mobile communicator is within a certain distance from the tire. As mentioned above, given that the Bluetooth protocol, or other telecommunication protocols similar thereto, allows for communications between various communicative devices from 10 meters to 100 meters, once mobile phone 28 comes within the range of communications module 16, a signal is received thereby that a communicative device such as for example mobile phone 28 is in range.

Once communications module 16 senses that a mobile phone is nearby, it sends out a query to the mobile phone to ask whether the latter wants to receive data stored in the memory of the system, per step 56. Upon seeing the request displayed on the phone, the user may activate the appropriate button on the phone to provide a response to system 2. If the user does not want any data from the tire, then the process of system 2 returns is to step 54 to once again make a determination on whether a mobile communicator is within its range.

However, if a positive response is received from the mobile phone that it indeed wants to receive information from the being discussed tire, then the process next determines, per step 60, on whether the mobile phone wants to receive the information relating to all of the tires of vehicle 6. If it does, per step 64, the tire would act as a server for all of the tires of vehicle 6. The data of the respective tires would then be sent by the being discussed tire, if any of those data is updated data and had not been sent earlier, under a WAP format, to mobile phone 28, per step 64. On the other hand, if the request from the mobile phone is that it does not want to receive the information of all tires from the being discussed tire per step 60, then the being discussed tire would act as a server for itself so that only the tire information relating to it is transmitted to mobile phone 28, per step 62.

The reason that mobile phone 28 would request the information from only the being discussed tire is because mobile phone 28 is provisioned with the capability of either retrieving information individually from all of the tires of the vehicle, or retrieving information from a single tire acting as a server for all of the tires of the vehicle. This alternative adaptability of mobile phone 28 is desirable and could be used, for example, in those instances where there may be a malfunction in the communications system of any one, or more, of the of the vehicle. For example, if system 2 of tire 4b of vehicle 6 were to malfunction and it has been acting as a server for all of the tires of vehicle 6 in communication with mobile phone 28, then the communications link between tire 4b and mobde phone 28 could either be disconnected, or inaccurate data be exchanged between tire 4b and mobile phone 28. At which time, recognizing that the received data may not be accurate, the user may switch to the mode whereby mobile phone 28 retrieves data from each of the tires of vehicle 6 individually. And with the separate retrieval of information, the user could easily determine, from the retrieved data from the respective tires, that there is a malfunction at tire 4b.

After information is transmitted to mobile phone 28, the process of the instant invention system, proceeds to step 66 (Fig, 2c) to make a determination on whether the vehicle is still running. If it is, a further determination is made, per step 68, on whether it is time to send updated information to mobile phone 28. If it is, the process to step 58 to again inquire mobile phone 28 as to whether it wants to the updated information from the being discussed tire.

If it is determined in step 66 that the vehicle is no longer moving, the process proceeds to step 70 to make a determination on whether mobile phone 28 is requesting information from the tire. If it is, the process returns to step 60 to query the mobile phone on whether it wants the information from all of the tires or whether it only wants the information from the being discussed tire. If mobile phone is not requesting information as determined in step 70, the process returns to step 30, as the system goes into the sleep mode.

Thus, the respective communication systems of the instant invention for each of the tires in combination effect a telecommunications network in which the system integrated to each tire monitors and measures, at minimum, at least one parameter, but most likely at least the pressure and temperature of the tire, whenever the the is rolling. The thus measured tire pressure data is temperature corrected by processor 14 of the system and stored in memory store 18. The tire could then send the data relating to itself to the other tires mounted, to the vehicle. Accordingly, each tire of the vehicle in turn has stored in its own memory store 18 the respective temperature corrected pressures of all of the tires of the vehicle.

And whenever a mobile communicator such as for example a mobile phone or a PDA comes within range of any one of the tires or the vehicle, each of the tires would ask the mobile phone whether it wants to receive the pressure information relating to itself, or to the other tires of the vehicle. If the answer is yes, each of the tires of the vehicle will act as a server for sending either the information relating only to itself, or the respective data relating to all of the tires of the vehicle, to the mobile phone in the appropriate wireless data link protocol. Putting it differently, for the telecommunications network of the instant invention, any one of the tires of the vehicle may act as the server, while the mobile communicator acts as the browser.

Finally, to conserve energy, if the car is not running and if the mobile phone is not requesting information from the tires, the respective systems of the tires of the vehicle would go into a sleep mode until either the tires once again begin to roll; or whenever pressure in any one of the tires of the vehicle drops below an alarm threshold, such as for example 1.5 bar or exceeds a high alarm threshold, such as for example 45 psi, a pressure well above the acceptable operating pressure of the tire.

This continuous monitoring of the alarm thresholds is represented by processing step 72. See Fig. 2A. So long as there is no detection of any alarm condition, the process continues to monitor for any alarm thresholds. But as soon as an alarm threshold is detected, the process proceeds to step 74 and an alarm signal is sent to the mobile comnmnicator. Thereafter, the process proceeds to step 36 to determine if the user at that point would want to request that information be provided to the communicator as discussed above. If there is no request received, the process would continue to monitor the alarm thresholds and output the alarm signal to the mobile communicator as long as the alarm condition persists, or at least for a predetermined period of time.

The embodiments of the invention discussed so far are such embodiments, where tire systems are communicatively interconnected to each other, as well as individually to a mobile communicator. The communication of data between the tire systems and mobile communicator is, for example, by means the Bluetooth protocol.

A further of the invention is the following. Transceivers are located at tire systems in tires for transmitting information to a mobile communicator. In such transmission of information, the tire systems located at tires may operate at a given communications protocol while the communications protocol used by mobile communicator may be different. A separate converter module may be used to convert the signals of one communications protocol (and/or frequency) into signals of another communications protocol (and/frequency) so that communications between the tire systems and the mobile communicator could be had efficiently irrespective of the difference in the communications protocols (and/or frequency). Such a separate converter module is adaptable to communicate using two communications protocols and/or two frequencies. It may be a module mounted to the vehicle or a portable device, for example a portable communications device such as a Personal Digital Assistant. Such a Portable device may be moved from one vehicle to another and utilized in different vehicles, so long as tires of those vehicles are equipped with tire systems that are communicable with the converter module.

While a preferred embodiment of the present invention is disclosed herein for purposes of explanation, numerons changes, modifications, variations, substitutions and equivalents in whole or in part should now be apparent to those skilled in art to which the invention pertains. Accordingly, it is intended that the present invention be limited only the spirit and scope of the hereto aooended claims.

## Claims

1. A system, comprising :
sensor means (20, 22, 24, 26) arranged to be in working relation with a tire for measuring at least one parameter relating to the condition of said tire; and
transceiver means (16) electrically or electromagnetically connected to said sensor means, said transceiver means being adaptable to remotely communicate with mobile communications means (28) carried by an operator of a vehicle, for receiving in said mobile communication means from said transceiver means data relating to parameters measured by said sensor means, **characterised in that** said mobile communications means comprises a mobiie communicator, and said transceiver means is operative under a telecommunications protocol that enables it to communicatively exchange data with said mobile communicator.

2. System of claim 1, further comprising a tire movably mounted to a vehicle, to which tire said sensor means (20, 22, 24, 26) and transceiver means (16), which are electrically interconnected, are integrated.

3. System of claim 2, further comprising said mobile communication means (28),

4. , System of claim 1 or 3, wherein said sensor meam (20, 22, 24, 26) is adaptable to be integrated with said tire, provided inside the tire, or coupled to the rim to which said tire is mounted about.

5. , System of any one of claims 1 to 4, wherein said sensor means (20, 22, 24, 26) comprises at least a pressure sensor (22) for measuring the air pressure of said tire and a sensor (20) for measuring the temperature of said tire, said system further comprising:
processor means (14) electrically connected to said sensor (20, 22, 24, 26) means for receiving the parameters measured by said sensor means, said processor means calculating a temperature corrected air pressure for said tire by compensating the measured air pressure with the measured temperature, said processor means further electrically connected to said transceiver means (16) for sending thereto data relating to the temperature corrected air pressure,

6. System of any one of claims 1 to 4, wherein said mobile communications means (28) comprises one of the following: a mobile phone, a pager, a personal digital assistance (PDA) device and a wireless terminal.

7. , System of claim 6, wherein said mobile phone (28) is adaptable to act as a WAP (Wireless Application. Protocol) based browser; and
wherein said processor means (14) in combination with said transceiver means (16) are adaptable to act as a WAP server.

8. , System of any one of claims to 4, wherein said transceiver means (16) comprises a wireless datalink protocol based communications module and wherein said mobile communications means (28) comprises a mobile phone operative under said protocol; and
wherein said communications module queries said mobile phone to determine whether said mobile phone wants to receive data relating to the measured parameters of said tire when said mobile phone comes within a given distance from said communications module.

9. , System of claim 5, further comprismg:
an energy store (10) for supplying electrical energy to at least said transceiver means (16) and said processor in calls (14); and
an energy conversion means (8, 12) electrically connected to said energy store, said energy conversion means converting the movement of said tire into electrical energy, the converted electrical energy being routed to said energy store for storage.

10. System of claim 9, wherein said energy store (10) comprises a rechargeable battery and wherein said energy conversion means (8, 12) comprises a piezoelectric generator or a linear actuator.

11. System of claim 5, wherein said sensor means (20, 22, 24, 26) further comprises at least one other sensor (24, 26) for measuring the rotational speed and/or acceleration of said tire.

12. System of claim 8, wherein said system (2) and said mobile phone (28) communicate periodically, said system sending updated data relating to the condition of said tire to said mobile phone every predetermined time period, said system immediately transmitting a warning signal data to said mobile phone if a selected one of the being measured parameters reaches or passes a given threshold; and
wherein said system and said mobile phone continue to communicate with each other and updated data continues to be transmitted to said mobile phone from said system until said vehicle is not moving and said mobile phone is no longer requesting updated data said system.
